(19) Europäisches Patentamt

European Patent Office

Office européen des brevets

(11) **EP 0 671 017 B1**

(12) **FASCICULE DE BREVET EUROPEEN**

(45) Date de publication et mention
de la délivrance du brevet:
**09.12.1998   Bulletin 1998/50**

(51) Int Cl.6: **G01V 1/28**

(21) Numéro de dépôt: **94927695.0**

(86) Numéro de dépôt international:
**PCT/FR94/01087**

(22) Date de dépôt: **19.09.1994**

(87) Numéro de publication internationale:
**WO 95/08781 (30.03.1995 Gazette 1995/14)**

(54) **METHODE D'ANALYSE DES TRACES SISMIQUES UTILISANT UNE TECHNIQUE DE CALIBRAGE STATISTIQUE POUR EN DEDUIRE DES PROPRIETES GEOLOGIQUES**

AUSWERTUNGSVERFAHREN VON SEISMISCHEN SPUREN DURCH EINE STATISTISCHE KALIBRIERUNG UM GEOLOGISCHE EIGENSCHAFTEN ABZULEITEN

METHOD FOR ANALISING SEISMIC TRACES USING A STATISTICAL CALIBRATION TECHNIQUE FOR DEDUCTION OF GEOLOGICAL CHARACTERISTICS

(84) Etats contractants désignés:
**DE GB IT NL**

(30) Priorité: **21.09.1993 FR 9311313**

(43) Date de publication de la demande:
**13.09.1995   Bulletin 1995/37**

(73) Titulaire: **INSTITUT FRANCAIS DU PETROLE**
**92500 Rueil Malmaison (FR)**

(72) Inventeurs:
• **FOURNIER, Frédérique**
**F-95240 Cormeilles-en-Parisis (FR)**
• **JOSEPH, Caroline**
**F-78112 Fourqueux (FR)**

(56) Documents cités:
**US-A- 4 293 309**          **US-A- 4 817 062**
**US-A- 4 926 394**

• **GEOPHYSICS, vol.53, no.10, Octobre 1988, TULSA, USA pages 1263 - 1275 P.M. DOYEN 'Porosity from seismic data : a geostatistical approach'**

## Description

La présente invention concerne une méthode d'analyse des traces sismiques pour en extraire des informations géologiques relatives à une formation souterraine, telle qu'un réservoir pétrolier par exemple.

La méthode selon l'invention permet de rapprocher des données que l'on a pu recueillir par exploration sismique de la formation et des données géologiques résultant de mesures qui ont été obtenues en descendant des sondes de mesure dans un ou plusieurs puits forés traversant la zone réservoir. A cet effet, la méthode utilise un étalonnage statistique entre les paramètres géologiques au niveau du réservoir, et les caractéristiques des mesures sismiques obtenues au voisinage des puits. Cet étalonnage statistique a pour objet essentiel d'établir une relation empirique entre les caractéristiques sismiques et les propriétés géologiques du réservoir au niveau des puits, relation qui est ensuite appliquée aux traces sismiques loin des puits pour estimer les caractéristiques géologiques du réservoir.

La méthode selon l'invention a donc pour objet d'améliorer la connaissance du réservoir entre les puits à partir de données sismiques de surface, présentant souvent une densité de couverture spatiale beaucoup plus importante que celle des puits.

Les résultats obtenus sont utiles au stade précoce de la vie du gisement quand on recherche les meilleurs emplacements pour forer des puits (phase d'appréciation ou début de phase de développement). A un stade plus tardif, les résultats sont également utiles pour imposer des contraintes au modèle de réservoir que l'on a établi pour représenter la formation réservoir en question.

Des techniques de calibrage statistique appliquées aux traces sismiques pour en extraire des paramètres géologiques au niveau d'un réservoir ont déjà été décrites par Doyen, 1988, Porosity from seismic data: a geostatistical approach, Geophysics, 53, n° 10, 1263-1275, et par Fournier et Derain, 1992, Seismic data integration in reservoir simulations through a multivariate statistical calibration approach, 62nd Ann. Intern. Mtg., Soc. Expl. Geophys., Expanded Abstracts, 95-98.

Les techniques de calibrage employées doivent pouvoir s'adapter facilement aux cas où plusieurs paramètres géologiques et sismiques interviennent (aspect multivariable) et aussi s'accommoder de relations éventuellement non linéaires entre les paramètres géologiques et sismiques. Il ne faut pas qu'elles soient limitées par trop d'hypothèses probabilistes sous-jacentes, et il faut en outre qu'elles fournissent une quantification éprouvée des incertitudes liées aux valeurs prédites par l'opération de calibrage.

Les techniques connues de calibrage géologique de données sismiques ne remplissent pas toujours tous ces objectifs.

La méthode selon l'invention permet, en respectant les impératifs précédemment définis, de prédire (en faire une estimation ou bien une simulation pour représenter leurs incertitudes) des paramètres géologiques d'une formation souterraine telle qu'un réservoir pétrolier, à partir d'informations géologiques obtenues à la suite de mesures ou d'analyses effectuées dans un ou plusieurs puits forés traversant la formation et à partir d'une collection de traces sismiques. Cette collection est obtenue par exploration sismique directe de la formation ou bien encore constituée de traces sismiques synthétiques calculées à partir des données obtenues dans les puits par exemple. Elle comporte en particulier un ensemble de traces constitué de traces réelles obtenues au voisinage immédiat des puits (traces adjacentes) ou bien encore de traces synthétiques calculées correspondant à ce même voisinage. C'est dans cet ensemble de traces que l'on va choisir la population d'étalonnage définie ci-après.

La méthode comprend les étapes suivantes: on délimite un intervalle d'analyse (en temps ou en profondeur) sur les traces sismiques au niveau de la formation souterraine, compatible avec la configuration géométrique de la formation, on caractérise les portions de traces sismiques, à l'intérieur de cet intervalle d'analyse, par un ensemble de $p$ attributs, on déduit desdites informations géologiques disponibles (obtenues dans les puits) un certain nombre $q$ de paramètres géologiques et on forme une population d'étalonnage constituée de points auxquels on associe les $p$ attributs attachés aux traces sismiques de l'ensemble de traces (adjacentes aux puits) et les $q$ paramètres géologiques. La méthode est caractérisée en ce que:

- on procède à un calibrage statistique sur la population de points dans un espace de représentation à $(p+q)$ dimensions, en recherchant une approximation de la fonction de densité multivariable relative à cette population de façon à établir une relation entre les paramètres géologiques et les attributs sismiques; et
- on applique cette relation aux traces sismiques de la collection, autres que celles de l'ensemble de traces adjacentes (proches des puits), de manière à prédire les $q$ paramètres géologiques correspondants associés aux attributs sismiques de ces autres traces (i.e des traces plus éloignées des puits), ainsi que les incertitudes sur les paramètres géologiques prédits.

Ce calibrage statistique comporte par exemple la détermination d'une approximation optimale de la fonction de densité de probabilité multivariable de la population d'étalonnage par une somme finie de densités de probabilité multivariables, appartenant à une famille définie de lois de probabilité, et l'utilisation de cette approximation à des fins de calibrage. On peut choisir par exemple une famille de lois gaussiennes pour déterminer cette approximation optimale.

Quand la formation est par exemple un réservoir recélant des effluents pétroliers, on délimite l'intervalle d'analyse en pointant sur les traces sismiques de la collection le toit et la base du réservoir.

Les attributs sismiques sont obtenus par exemple à partir des amplitudes de chaque portion de trace sismique de la collection de traces ou bien à partir du module du signal analytique, ou bien encore en déterminant le spectre d'amplitude des portions de traces.

L'étape de détermination des q paramètres géologiques comporte par exemple une analyse d'échantillons prélevés dans les puits ou une analyse de diagraphies réalisées au moyen d'outils descendus dans les puits. Les traces sismiques utilisées peuvent être selon les cas obtenues par exploration sismique de la formation, synthétisées à partir de données de puits, réelles ou elles-mêmes synthétiques.

Comme paramètre géologique, on peut choisir par exemple la porosité moyenne des échantillons géologiques au niveau du réservoir.

La méthode selon l'invention appliquée à des fins de calibrage présente l'avantage de bien s'adapter à des cas de variables multiples, et elle permet de traiter des problèmes où des relations non linéaires existent entre les paramètres géologiques et les attributs sismiques. Elle fournit également une quantification des incertitudes puisque la fonction de densité de probabilité est totalement connue. Par ailleurs, cette méthode peut être complétement non paramétrique. Elle est en outre efficace en ce qui concerne le temps de calcul requis, même dans le cas où le nombre de paramètres et attributs pris en compte est élevé.

D'autres caractéristiques et avantages de la méthode apparaîtront mieux à la lecture de la description qui va suivre en se référant aux dessins annexés où :

- la Fig.1 montre schématiquement une formation souterraine traversée par des puits;
- la Fig.2 illustre la méthodologie de calibrage employée dans un diagramme réduit à deux dimensions par commodité où S et G représentent respectivement l'attribut sismique et la variable géologique considérés;
- la Fig. 3 montre l'histogramme d'un paramètre géologique tel que l'épaisseur de grès T d'une formation étudiée, et superposées, la distribution marginale de l'approximation $\hat{f}(T)$ ainsi que ses six composantes gaussiennes numérotées de 1 à 6.
- la Fig. 4 montre, pour la formation testée, un diagramme des épaisseurs de grès T dans la formation en fonction d'un attribut sismique S qui est une combinaison linéaire particulière des amplitudes des traces;
- les Fig. 5A à 5D montrent, au niveau de la formation étudiée et de quatre puits particuliers, la distribution conditionnelle $\hat{f}(T/s)$ de l'épaisseur T des grès, connaissant les données sismiques S, ainsi que l'épaisseur réelle des grès mesurée dans ces puits (en pointillé sur les figures) à titre de comparaison;
- la Fig. 6 présente un diagamme des épaisseurs PT de grès prédites, en fonction des épaisseurs réelles de grès, par application de la méthode à la formation testée, les points étant codés par la probabilité PR d'obtenir l'épaisseur prédite PT; et
- les Fig. 7 et 7A montrent respectivement, et avec des échelles différentes, la répartition des épaisseurs de grès prédite par application de la méthode à la formation testée.

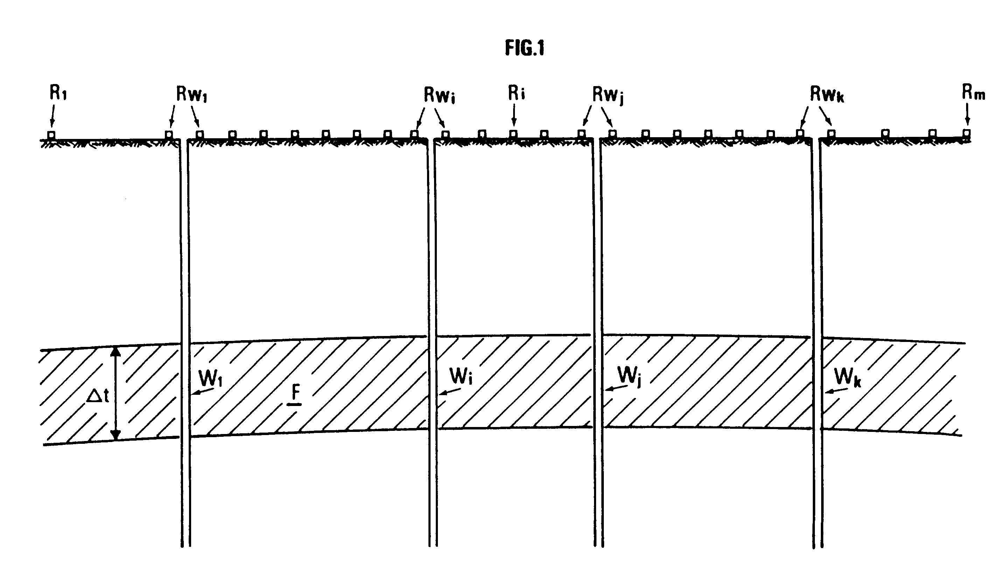

La méthode de calibrage statistique selon l'invention s'applique à une formation souterraine F (Fig.1) traversée généralement par plusieurs puits $W_1$ ... $W_i$ ... $W_j$ ... $W_k$, telle qu'un réservoir contenant des effluents pétroliers. Sur cette formation ont été collectées des données à caractère géologique et sismique.

Par une analyse des échantillons prélevés dans les puits traversant la formation, ou à la suite de mesures effectuées en descendant dans les puits des outils de diagraphie, on a pu déterminer un certain nombre q de paramètres géologiques locaux à la formation, le long de ces puits. Il s'agit par exemple de la valeur de la porosité moyenne du réservoir, de l'épaisseur cumulée des lithofaciès etc.

On dispose également d'une collection de traces sismiques qui a été obtenue notamment par des campagnes classiques de prospection sismique en répartissant en surface des récepteurs sismiques $R_1$... $R_i$... $R_m$, et en effectuant des enregistrements au moyen de ces récepteurs. Cette collection peut encore être constituée de traces sismiques synthétiques calculées à partir de données de puits réelles ou simulées, comme le savent les spécialistes.

La méthode comporte tout d'abord la délimitation, sur les traces de la collection, d'un intervalle d'analyse. Il peut s'agir d'un intervalle de temps $\Delta\tau$ ou d'un intervalle de profondeur si les données sismiques en fonction du temps sont préalablement transformées en données en fonction de la profondeur. Cet intervalle d'analyse est obtenu par exemple en pointant sur les traces une zone d'intérêt. S'il s'agit d'un réservoir pétrolier, on pointe, par exemple, la position du toit et de la base du réservoir.

Toutes les traces de la collection sont ensuite caractérisées à l'intérieur de cet intervalle d'analyse, par un certain nombre p d'attributs sismiques qui sont obtenus par exemple à partir des amplitudes de chaque trace sismique, à partir du module du signal analytique, représentatif, on le sait, de l'énergie de la trace, ou encore en déterminant le spectre d'amplitude des traces, etc.

Parmi la collection de traces disponibles, on sélectionne un ensemble de traces RW1... RWi... RWj... RWn qui sont soit les traces sismiques obtenues au voisinage du (ou de chaque puits) traversant la formation, soit des traces synthétiques modélisées correspondant à ce même voisinage ou à un voisinage simulé.

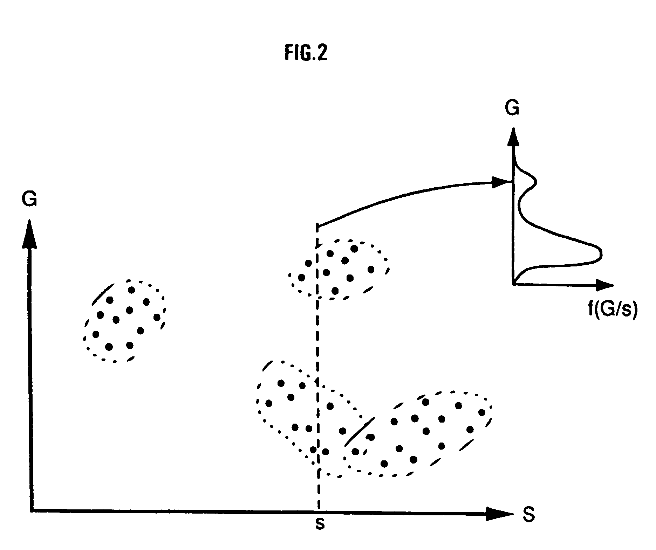

La méthode comporte ensuite un rapprochement des paramètres géologiques obtenus dans les puits et des attributs sismiques des traces RW1... RWi... RWn de l'ensemble de traces adjacentes, de façon à établir une relation empirique. On forme ainsi une population d'étalonnage avec cet ensemble de traces associées aux puits que l'on représente par les q paramètres géologiques et les p attributs simiques. On peut la représenter (Fig.2) dans un espace multivariable de dimension (p + q) que l'on souhaite calibrer.

On recherche alors une approximation optimale $\hat{f}$ de la fonction de densité multivariable f:

$$\hat{f}(G1... Gq, S1... Sp) \simeq f(G1 ... Gq, S1 ... Sp)$$

où

$G_i =$    paramètre géologique i, "i = 1 ... q"
$S_j =$    attribut sismique j, "j = 1 ... p".
$f =$    densité empirique de la population d'étalonnage.

Cette partie constitue l'étape de calibrage entre les p attributs sismiques et les q paramètres géologiques, et permet d'établir la relation empirique recherchée par l'intermédiaire de la fonction de densité approchée $\hat{f}$ et de la fonction de densité conditionnelle associée $\hat{f}$ (G/s) (Fig.2).

Une relation empirique ayant été établie par cette étape de calibrage, on va s'en servir pour inférer la valeur des paramètres géologiques $G_1 ... G_q$ que l'on peut associer à des valeurs des attributs sismiques $S_1 = s_1... S_p = s_p$, calculées sur les traces sismiques de la collection non adjacentes aux puits. Cette étape est effectuée en calculant la fonction de densité conditionnelle de $(G_1 ... G_q)$ connaissant $(S_1 = s_1 ... S_p = s_p)$ :

$$\hat{f}(G_1...G_q / S_1 = s_1 ... S_p = s_p)$$

$$= \frac{\hat{f}(G_1... G_q, S_1 = s_1 ... S_p = s_p)}{\hat{f}(S_1 ... S_p = s_p)}$$

par définition

Il est possible alors de choisir comme prédiction des paramètres géologiques $(G_1 ... G_q)$ pour les valeurs connues $s_1 ...s_p$ des attributs sismiques, différentes caractéristiques de cette fonction de densité conditionnelle

$$\hat{f}(G_1, ... G_q /S_1 = s_1 ... S_p = s_p),$$

telles que moyenne, mode, quantiles etc. Connaissant entièrement la distribution de $(G_1 ... Gq)$ pour lesdites valeurs $(s_1 ... s_p)$, les incertitudes associées à la valeur prédite pour $(G_1 ... Gq)$ peuvent aussi être quantifiées.

En particulier il est évident pour les spécialistes que la connaissance de la distribution $(G_1 ... G_q)$ pour lesdites valeurs $(s_1... s_p)$, permet aussi de réaliser des tirages aléatoires de valeurs des paramètres géologiques conditionnés par les attributs sismiques, ce qui est une autre façon de représenter l'incertitude à la prédiction.

On voit donc finalement qu'en tout point d'une formation telle qu'un champ pétrolier, où l'on dispose de données sismiques acquises au préalable, la méthode selon l'invention permet d'inférer des valeurs associées de paramètres géologiques et les incertitudes liées à ces valeurs. La méthode permet donc d'estimer ou de simuler des parois géologiques conditionnées par l'information sismique.

Suivant un mode de mise en oeuvre particulier, on obtient l'approximation recherchée de la fonction de densité empirique, sous la forme d'une combinaison de densités associées à des lois gaussiennes multivariables comme décrit par exemple dans Royer, 1988, New approaches to the accognition of anomalies in exploration geochemistry, in quantitative analysis of mineral and energy resources, Chung et al., Reidel Publishing Company, 89-112.

Dans ce cas, la fonction $\hat{f}$ s'exprime sous la forme d'une somme de fonctions de densité $f_k$:

$$\hat{f}\left(G_1 \ldots G_q, S_1 \ldots S_p\right) = \sum_{k=1}^{K} p_k \, f_k(G_1 \ldots G_{q'}, S_1 \ldots S_p)$$

où

$G_i =$     paramètre géologique i, "i = 1 ... q",
$S_j =$     attribut sismique j, "j = 1 ... p",
$\hat{f} =$     densité approchée de la population d'étalonnage,
$K =$     nombre de sous-populations obtenues par la décomposition gaussienne,
$p_k =$     poids de la sous-population k, "k = 1 ... K",
$f_k =$     densité gaussienne de la sous-population k, "k = 1 ... K".

$$f_k(X) = \frac{1}{(2\pi)^{r/2} |\Sigma_x|^{1/2}} \cdot \exp\left[ -\frac{1}{2}(X - \overline{X})^{'} \Sigma_x^{-1}(X - \overline{X}) \right]$$

où

$r = p + q$,
$X =$ le vecteur des paramètres géologiques et des attributs sismiques ($X = [X_1, \ldots, X_r]$),
$\overline{X} =$ la valeur moyenne des paramètres géologiques et des attributs sismiques,
$\Sigma_x =$ matrice de variance - covariance associée.

Dans ce cas, la fonction de densité conditionnelle de ($G_1 \ldots Gq$) sachant que ($S1=s1, S2=s2, \ldots Sp=sp$) s'écrit:

$$\hat{f}(G_1, \ldots G_q / S_1 = s_1 \ldots S_p = s_p)$$

$$= \frac{\displaystyle\sum_{k=1}^{K} p_k f_k(G_1 \ldots G_{q'}, S_1 = s_1 \ldots S_p = s_p)}{\displaystyle\sum_{k=1}^{K} p_k f_k (S_1 = s_1 \ldots S_p = s_p)}$$

$$= \frac{\displaystyle\sum_{k=1}^{K} p_k f_k(G_1 \ldots G_{q'}, S_1 = s_1 \ldots S_p = s_p)}{\displaystyle\sum_{k=1}^{K} p_k \left[ \int_{g_1} \ldots \int_{g_q} f_k(G_1 = g_1 \ldots G_q = g_{q'}, S_1 = s_1 \ldots S_p = s_p) \, dg_q \ldots dg_1 \right]}$$

La validité de la méthode selon l'invention a été testée notamment sur un réservoir pétrolier d'environ 70 m d'épaisseur contenant des hydrocarbures liquides, développé par une soixantaine de puits et couvert par des opérations de prospection sismique de surface 2D à maille dense.

Les niveaux producteurs correspondent à des grès, des grès dolomitiques et des dolomies vacuolaires séparés par des niveaux couvertures de type argile, argile anhydritique ou dolomicrite. Les caractéristiques pétrophysiques des réservoirs sont très variables d'un puits à l'autre ; elles sont essentiellement conditionnées par la nature lithologique du réservoir (grès de forte porosité ou dolomies moins poreuses).

Les données de puits disponibles étaient des carottes prélevées dans quelques puits, des mesures diagraphiques brutes dans tous les puits et celles obtenues par une interprétation combinée de ces mesures en termes de lithofaciès avec six lithofaciès majeurs :

- couvertures argileuses,
- dolomicrites,
- réservoirs dolomitiques,
- réservoirs gréseux,
- dolomies vacuolaires,
- couvertures anhydritiques.

La connaissance de la répartition spatiale des différents lithofaciès est capitale car elle conditionne les propriétés pétrophysiques du réservoir. C'est pourquoi on caractérise sur cet exemple chaque puits au niveau du réservoir par les épaisseurs cumulées (sur l'ensemble de la formation étudiée) des six lithofaciès. Ces six paramètres étaient en l'occurrence les paramètres géologiques à calibrer avec les attributs sismiques.

Le toit du réservoir a été pointé sur les données sismiques disponibles sur le champ (22 profils sismiques avec 500 m entre lignes, 17 m entre points miroirs, avec un pas d'échantillonnage de 4ms en temps double) après un calage entre l'échelle des temps et celle de profondeur réalisé au niveau des puits.

A partir du toit du réservoir, un intervalle de temps ou fenêtre sismique temporelle de taille constante (32 ms temps double) a été analysé, correspondant donc à l'intervalle profondeur au niveau des couches productrices. Les portions de traces sismiques ainsi définies ont été caractérisées par des combinaisons linéaires des amplitudes initiales, au nombre de quatre, qui constituent ainsi les attributs sismiques à calibrer avec les paramètres géologiques.

La population d'étalonnage retenue comprenait les données géologiques associées aux différents puits du champ et, pour chaque puits, les trois traces sismiques (telles que RWi... RWn etc Fig.1) les plus proches.

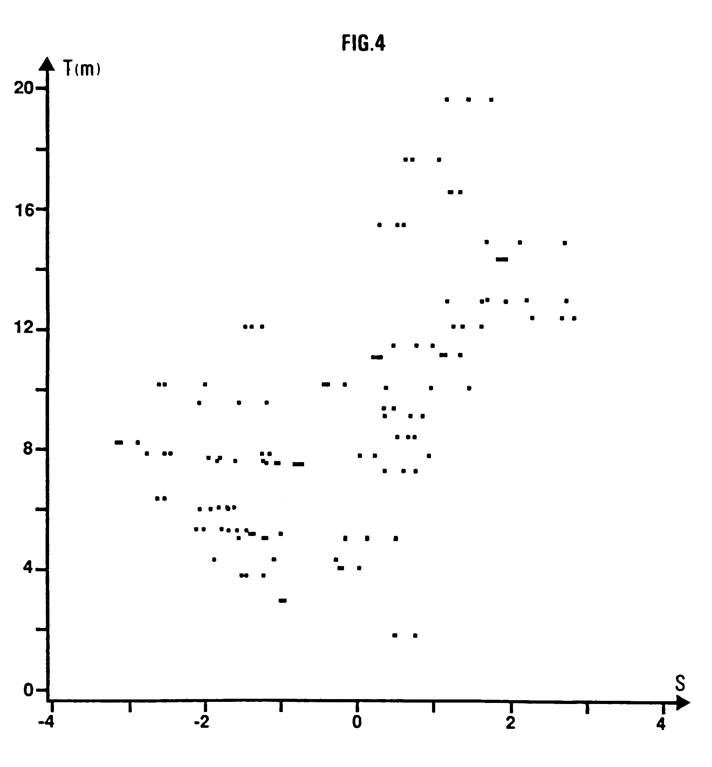

La méthode selon l'invention a été utilisée pour prédire l'épaisseur cumulée de la lithologie "réservoirs gréseux" entre les puits, qui était le paramètre le plus intéressant pour déterminer le comportement pétrophysique du réservoir. La population d'étalonnage a donc été représentée dans un espace de dimension 5 (défini par l'épaisseur cumulée du lithofaciès grès et les quatre attributs sismiques), où une approximation de la fonction de densité multivariable par la somme de fonctions de densité gaussiennes a été recherchée. Comme le montre le diagramme de la Fig.4, la relation entre le paramètre géologique et les attributs sismiques est loin d'être linéaire.

On a décomposé la population d'étalonnage en six classes gaussiennes ce qui a permis d'approximer la densité de probabilité multivariable de la population d'étalonnage par la formule suivante :

$$\hat{f}(x) = \sum_{k=1}^{6} p_k \, f_k(x)$$

où

$$f_k(x) = \frac{1}{(2\pi)^{5/2} |\Sigma_k|^{1/2}} \exp\left[ -\frac{1}{2}(x - \bar{x})' \, \sum_k^{-1}(x - \bar{x}) \right]$$

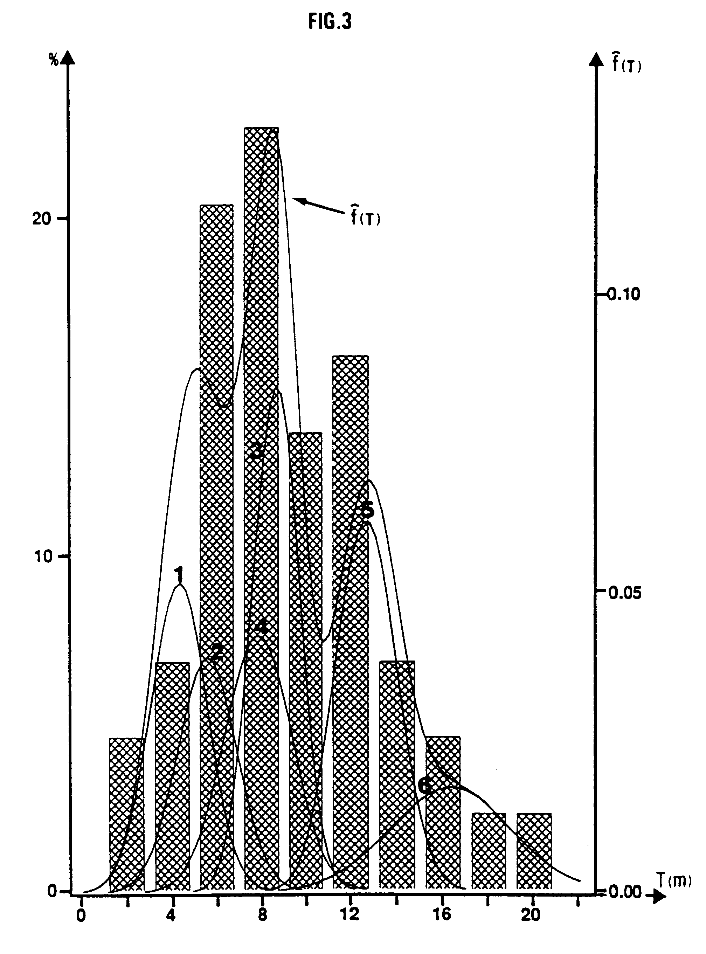

On voit sur la Fig.3 en particulier que la qualité de l'approximation est satisfaisante. La recherche de cette approximation optimale constitue la phase d'étalonnage.

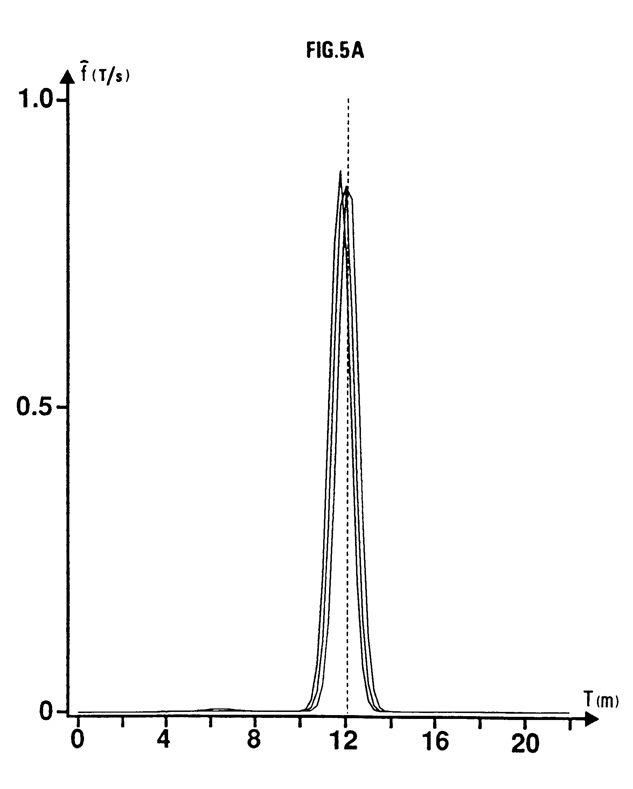

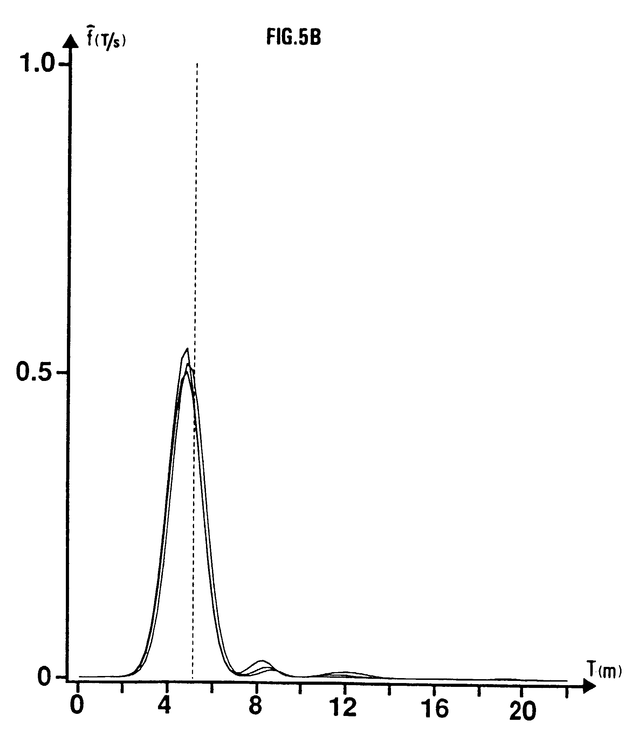

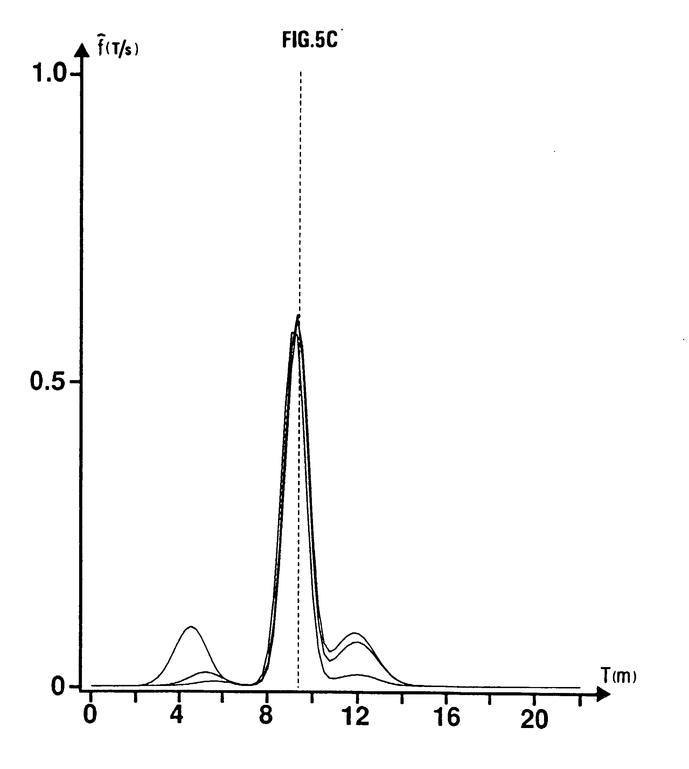

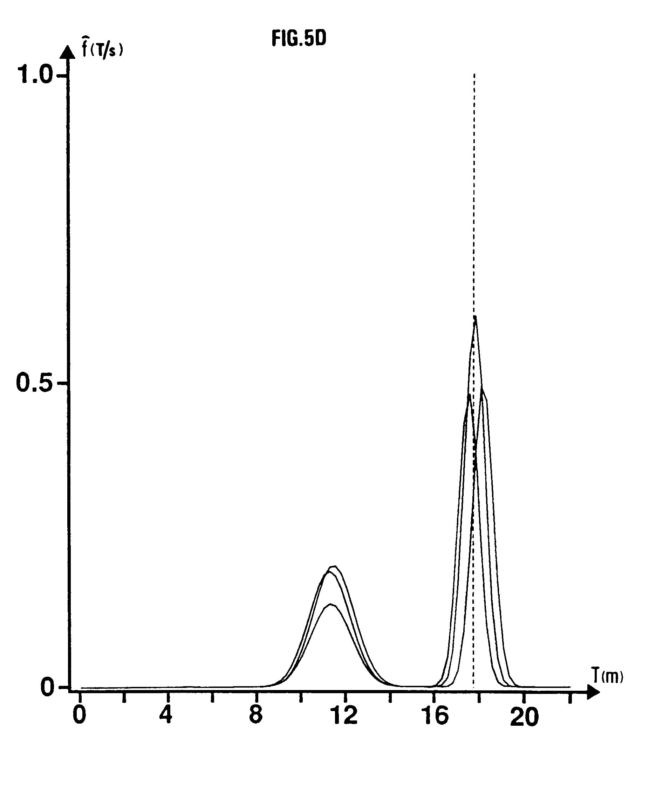

A partir de l'expression de l'approximation de la densité de probabilité multivariable, on a pu calculer la fonction de densité du paramètre géologique, conditionnée par les valeurs des attributs sismiques, ce qui revenait à prédire la distribution du paramètre géologique connaissant les attributs sismiques. La distribution prédite de l'épaisseur des grès relativement aux attributs sismiques est représentée sur les Fig. 5A à 5D pour quelques puits.

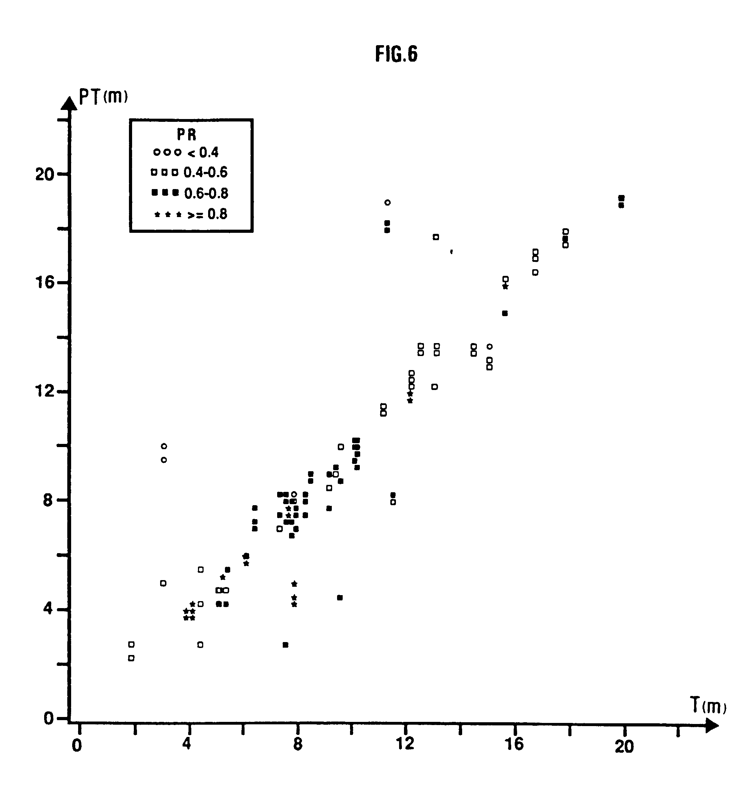

La valeur prédite peut être caractérisée par des paramètres statistiques classiques comme le mode de la distribution (valeur la plus probable), la valeur moyenne, les quartiles, etc. Il est à noter que pour la plupart des puits de la population d'étalonnage, le mode de la distribution prédite est très proche de la valeur réelle de l'épaisseur des grès (cf. : Fig. 6). Puisque la distribution est entièrement connue, l'incertitude attachée à la prédiction peut être quantifiée par différentes mesures, telles l'écart-type ou l'intervalle interquartile.

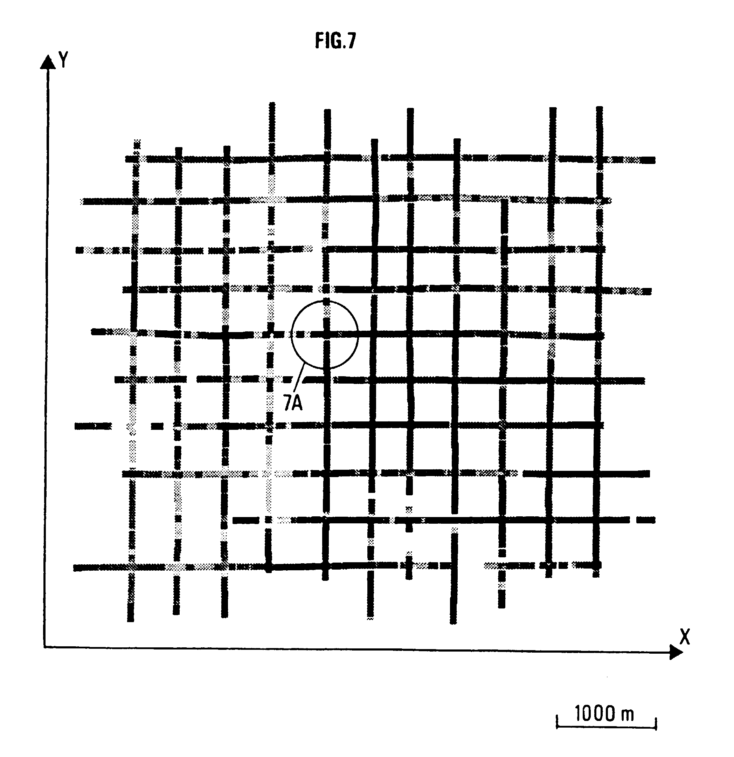

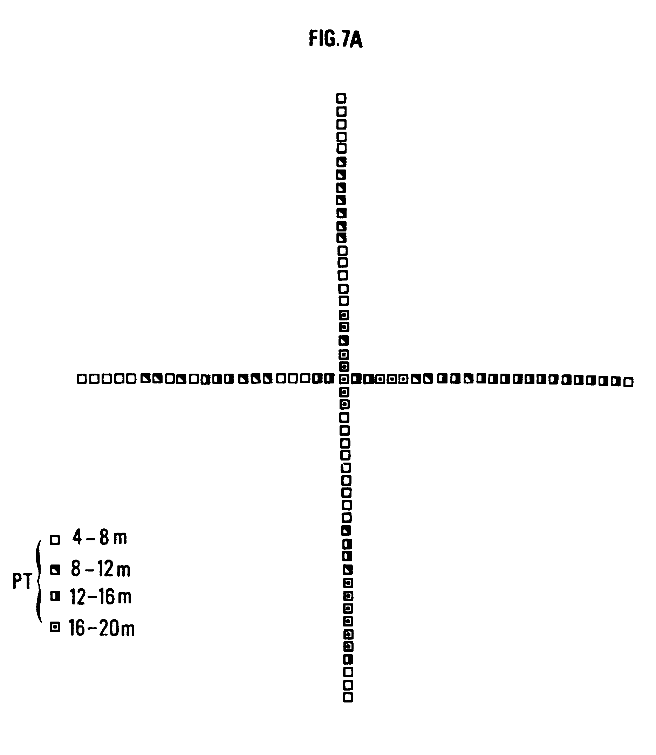

Ce processus de calibrage a été ensuite appliqué à l'ensemble des traces sismiques obtenues à l'issue de la campagne d'exploration sismique 2D effectuée sur le champ, permettant de cartographier l'épaisseur possible des grès de la formation entre les puits avec un maillage fin (celui obtenu par la prospection sismique). Sur la carte de la Fig. 7, la valeur estimée est celle du mode de la distribution. Cette carte complète la connaissance du réservoir donnée par les seuls puits, permettant une implantation de nouveaux puits dans les zones les plus favorables (où il y a une forte épaisseur cumulée de grès), mais fournissant aussi une description complémentaire des caractéristiques géologiques du réservoir à prendre en compte dans l'élaboration du modèle de gisement.

## Revendications

1. Méthode pour prédire des paramètres géologiques d'une formation souterraine (F), à partir d'informations géologiques obtenues à la suite de mesures ou analyses effectuées dans un ou plusieurs puits forés traversant la formation et à partir d'une collection de traces sismiques obtenues par exploration sismique de la formation, cette collection comprenant un ensemble de traces constitué des traces obtenues au voisinage immédiat des puits, dans laquelle on délimite un intervalle d'analyse sur les traces sismiques au niveau de la formation souterraine, compatible avec la configuration de la formation, on caractérise les portions de traces sismiques, à l'intérieur dudit intervalle d'analyse, par un ensemble de p attributs, on déduit desdites informations géologiques disponibles, un certain nombre q de paramètres géologiques et on forme une population d'étalonnage constituée de points auxquels on associe les p attributs attachés aux traces sismiques dudit ensemble de traces et les q paramètres géologiques, la méthode étant caractérisée en ce que:

   - on procède à un calibrage statistique sur la population de points dans un espace de représentation à p+q dimensions, en recherchant une approximation de la fonction de densité multivariable relative à ladite population de façon à établir une relation empirique entre lesdits paramètres géologiques et lesdits attributs sismiques; et
   - on applique cette relation aux traces sismiques de ladite collection, autres que celles dudit ensemble de traces, de manière à prédire les q paramètres géologiques correspondants associés aux attributs sismiques desdites autres traces, ainsi que les incertitudes sur les paramètres géologiques prédits.

2. Méthode selon la revendication 1, caractérisée en ce que la prédiction des paramètres géologiques consiste en une estimation desdits paramètres.

3. Méthode selon la revendication 1, caractérisée en ce que la prédiction des paramètres géologiques consiste en une simulation desdits paramètres pour représenter les incertitudes.

4. Méthode selon l'une des revendications 1 à 3, caractérisée en ce que ledit calibrage statistique comporte la détermination d'une approximation optimale de la fonction de densité de probabilité multivariable de la population d'étalonnage par une somme finie de densités de probabilité multivariables, appartenant à une famille de lois de probabilité déterminée, et l'utilisation de cette approximation à des fins de calibrage.

5. Méthode selon la revendication 4, caractérisée en ce que l'on choisit une famille de lois gaussiennes pour déterminer ladite approximation optimale.

6. Méthode selon l'une des revendications 1 à 5, caractérisée en ce que ladite formation est un réservoir recélant des effluents pétroliers, ledit intervalle d'analyse étant délimité en pointant sur lesdites traces le toit et la base du réservoir.

7. Méthode selon l'une des revendications précédentes, caractérisée en ce que lesdits attributs sismiques sont obtenus à partir des amplitudes de chaque portion de trace sismique dudit ensemble.

8. Méthode selon l'une des revendications précédentes, caractérisée en ce que lesdits attributs sismiques sont obtenus à partir du module du signal analytique.

9. Méthode selon l'une des revendications précédentes, caractérisée en ce que lesdits attributs sismiques sont obtenus en déterminant le spectre d'amplitude desdites portions de traces.

10. Méthode selon l'une des revendications précédentes, caractérisée en ce que lesdits paramètres géologiques sont obtenus par analyse d'échantillons prélevés dans les puits.

11. Méthode selon l'une des revendications précédentes, caractérisée en ce que lesdits paramètres géologiques sont obtenus par analyse de diagraphies réalisées au moyen d'outils descendus dans les puits.

12. Méthode selon l'une des revendications précédentes, caractérisée en ce que l'on choisit comme paramètre géologique, la porosité moyenne desdits échantillons.

13. Méthode selon l'une des revendications précédentes, caractérisée en ce que l'on utilise des traces sismiques obtenues par exploration sismique de la formation.

14. Méthode selon l'une des revendications précédentes, caractérisée en ce que l'on utilise des traces sismiques synthétiques calculées à partir de données réelles de puits.

15. Méthode selon l'une des revendications précédentes, caractérisée en ce que l'on utilise des traces sismiques synthétiques calculées à partir de données synthétiques de puits.


**Patentansprüche**

1. Verfahren zum Vorhersagen der geologischen Parameter einer unterirdischen Formation (F) ausgehend von geologischen Informationen, die anschließend an Messungen oder Analysen erhalten wurden, die in einem oder mehreren die Formation durchsetzenden Bohrlöchern vorgenommen wurden und ausgehend von einer Sammlung seismischer Spuren, die durch seismische Exploration der Formation erhalten wurden, wobei diese Sammlung eine Anordnung von Spuren, bestehend aus Spuren umfaßt, die unmittelbar benachbart den Bohrlöchern erhalten wurde, wobei man ein Analysenintervall auf den seismischen Spuren in Höhe der unterirdischen Formation abgrenzt, die kompatibel mit der Konfiguration der Formation ist, man die Teile der seismischen Spuren im Inneren dieses Analyseintervalls durch eine Gruppe von p Attributen charakterisiert, man aus diesen verfügbaren geologischen Informationen eine gewisse Anzahl q geologischer Parameter herleitet und eine Standardbesetzung bildet, die aus Punkten aufgebaut ist, denen man die p Attribute zuordnet, die an den seismischen Spuren dieser Gruppen von Spuren sowie den q geologischen Parametern anhaften, dadurch gekennzeichnet, daß

   - man eine statistische Kalibrierung an der Besetzung (Population) von Punkten in einen Raum der Darstellung mit p+q Dimensionen vornimmt, man eine Annäherung an die Funktion der multivariablen Dichte relativ zu dieser Besetzung oder Population sucht, derart, daß eine empirische Beziehung zwischen den geologischen Parametern und diesen seismischen Attributen hergestellt wird, und
   - man diese Beziehung an die seismischen Spuren dieser Sammlung außer denen dieser Gruppe von Spuren derart legt, daß die q geologischen Parameter entsprechend den den seismischen Attributen dieser anderen Spuren zugeordneten Parameter sowie die Unbestimmtheiten an den vorhergesagten geologischen Parametern vorhersagbar werden.

2. Verfahren nach Anspruch 1, dadurch gekennzeichnet, daß die Vorhersage der geologischen Parameter in einer Abschätzung dieser Parameter besteht.

3. Verfahren nach Anspruch 1, dadurch gekennzeichnet, daß die Vorhersage der geologischen Parameter in einer Simulation dieser Parameter zur Darstellung der Unbestimmtheiten besteht.

4. Verfahren nach einem der Ansprüche 1 bis 3, dadurch gekennzeichnet, daß diese statistische Kalibrierung die Bestimmung einer optimalen Annäherung der Funktion der Dichte multivariabler Wahrscheinlichkeit der Standardbesetzung (Eichungspopulation) durch eine endliche Summe multivariabler Wahrscheinlichkeitsdichten umfaßt, die zu einer Familie von Gesetzen bestimmter Wahrscheinlichkeit und zur Verwendung dieser Annäherung zu Kalibrierungszwecken führt.

5. Verfahren nach Anspruch 4, dadurch gekennzeichnet, daß man eine Familie Gauß'scher Gesetze zur Bestimmung dieser optimalen Annäherung auswählt.

**6.** Verfahren nach einem der Ansprüche 1 bis 5, dadurch gekennzeichnet, daß diese Formation ein Speicher ist, der Erdölabströme verbirgt, wobei dieses Analyseintervall begrenzt wird, indem man auf diese Spuren das Dach und die Basis des Speichers richtet.

**7.** Verfahren nach einem der vorhergehenden Ansprüche, dadurch gekennzeichnet, daß diese seismischen Attribute erhalten werden ausgehend von Amplituden jedes Teiles der seismischen Spur dieser Gesamtheit.

**8.** Verfahren nach einem der vorhergehenden Ansprüche, dadurch gekennzeichnet, daß diese seismischen Attribute erhalten werden ausgehend vom Modul des analytischen Signals.

**9.** Verfahren nach einem der vorhergehenden Ansprüche, dadurch gekennzeichnet, daß diese seismischen Attribute erhalten werden, indem man das Amplitudenspektrum dieser Teilspuren bestimmt.

**10.** Verfahren nach einem der vorhergehenden Ansprüche, dadurch gekennzeichnet, daß diese geologischen Parameter erhalten werden durch Analyse von in den Bohrlöchern entnommenen Proben.

**11.** Verfahren nach einem der vorhergehenden Ansprüche, dadurch gekennzeichnet, daß diese geologischen Parameter erhalten werden durch Analyse von Diagraphien, die vermittels in das Bohrloch hinabgelassenen Werkzeugen genommen wurden.

**12.** Verfahren nach einem der vorhergehenden Ansprüche, dadurch gekennzeichnet, daß man als geologischen Parameter die mittlere Porosität dieser Proben wählt.

**13.** Verfahren nach einem der vorhergehenden Ansprüche, dadurch gekennzeichnet, daß man seismische Spuren verwendet, die durch seismische Exploration der Formation erhalten wurden.

**14.** Verfahren nach einem der vorhergehenden Ansprüche, dadurch gekennzeichnet, daß man synthetische seismische Spuren verwendet, die ausgehend von reellen Bohrlochdaten berechnet wurden.

**15.** Verfahren nach einem der vorhergehenden Ansprüche, dadurch gekennzeichnet, daß man synthetische seismische Spuren verwendet, die ausgehend von synthetischen Bohrlochdaten berechnet wurden.

## Claims

**1.** A method of predicting the geological parameters of an underground formation (F) from geological data obtained by taking measurements or conducting analyses in one or more wells bored through the formation and from a collection of seismic traces obtained through seismic exploration of the formation, this collection consisting of a set of traces made up of traces obtained in the immediate vicinity of the wells, in which an analysis range is marked out on the seismic traces on a level with the underground formation, compatible with the configuration of the formation, the portions of seismic traces are characterised within said analysis range by a set of p attributes, a certain number q of geological parameters is deduced from the said available geological information and a calibration population is set up comprising points with which the p attributes linked to the seismic traces of said set of traces and the q geological parameters are associated, the method being characterised in that:

- a statistical calibration is performed on the population of points in a p+q dimensional space of representation by seeking an approximation to the multi-variable density function relative to said population in order to establish an empirical relation between said geological parameters and said seismic attributes; and
- this relation is applied to the seismic traces of said collection other than those of said set of traces so as to predict the corresponding q geological parameters associated with the seismic attributes of said other traces as well as the uncertainties about the geological parameters predicted.

**2.** A method as claimed in claim 1, characterised in that predicting the geological parameters consists in estimating said parameters.

**3.** A method as claimed in claim 1, characterised in that predicting the geological parameters consists in simulating said parameters in order to represent the uncertainties.

**4.** A method as claimed in one of claims 1 to 3, characterised in that said statistical calibration consists in determining an optimum approximation of the multi-variable probability density function of the calibration population by a finite sum of multi-variable probability densities, belonging to a given family of laws of probability, and using this approximation for calibration purposes.

**5.** A method as claimed in claim 4, characterised in that a family of Gaussian laws is selected to determine said optimum approximation.

**6.** A method as claimed in one of claims 1 to 5, characterised in that said formation is a reservoir containing petroleum effluents, said analysis range being marked out by picking out the top and base of the reservoir on said traces.

**7.** A method as claimed in one of the preceding claims, characterised in that said seismic attributes are obtained from the amplitudes of each portion of seismic trace of said set.

**8.** A method as claimed in one of the preceding claims, characterised in that said seismic attributes are obtained from the amplitude of the analytic signal.

**9.** A method as claimed in one of the preceding claims, characterised in that said seismic attributes are obtained by determining the amplitude spectrum of said portions of traces.

**10.** A method as claimed in one of the preceding claims, characterised in that said geological parameters are obtained by analysing samples taken from the wells.

**11.** A method as claimed in one of the preceding claims, characterised in that said geological parameters are obtained by analysing logs recorded by means of tools lowered into the wells.

**12.** A method as claimed in one of the preceding claims, characterised in that the average porosity of said samples is selected as a geological parameter.

**13.** A method as claimed in one of the preceding claims, characterised in that seismic traces obtained by seismic exploration of the formation are used.

**14.** A method as claimed in one of the preceding claims, characterised in that synthetic seismic traces calculated from actual well data are used.

**15.** A method as claimed in one of the preceding claims, characterised in that synthetic seismic traces calculated from synthetic well data are used.

FIG.1

EP 0 671 017 B1

FIG.2

## FIG.3

FIG.4

# FIG.5A

FIG.5B

FIG.5C

FIG.5D

FIG.6

19

## FIG.7

## FIG.7A

PT {
□ 4 – 8 m
◨ 8 – 12 m
◩ 12 – 16 m
▣ 16 – 20 m